(19) Europäisches Patentamt
European Patent Office
Office européen des brevets

(11) EP 1 195 395 A1

(12) **EUROPÄISCHE PATENTANMELDUNG**

(43) Veröffentlichungstag:
**10.04.2002 Patentblatt 2002/15**

(51) Int Cl.[7]: **C08G 18/08**, C08G 18/10, C08G 18/48, C08G 18/66, C08K 5/527

(21) Anmeldenummer: **01122526.5**

(22) Anmeldetag: **24.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.10.2000 DE 10049469**

(71) Anmelder: **BAYER AG**
**51368 Leverkusen (DE)**

(72) Erfinder:
- **Bräuer, Wolfgang, Dr.**
  **51375 Leverkusen (DE)**
- **Kaufhold, Wolfgang, Dr.**
  **51061 Köln (DE)**
- **Hoppe, Hans-Georg**
  **42799 Leichlingen (DE)**
- **Wussow, Hans-Georg, Dr.**
  **40597 Düsseldorf (DE)**

(54) **Thermoplastisch verarbeitbare Polyurethanelastomere mit verbesserter Eigenfarbe**

(57) Thermoplastisch verarbeitbare Polyurethanelastomere (TPU) mit verbesserter Eigenfarbe durch Einsatz von 0,001 bis 1 Gew.-%, bezogen auf TPU, eines oder mehrerer Verbindungen von speziell substituierten Pentaerythritol-diphosphiten .

EP 1 195 395 A1

## Beschreibung

Die vorliegende Erfindung betrifft thermoplastisch verarbeitbare Polyurethanelastomere (TPU) mit verbesserter Eigenfarbe durch Einsatz eines oder mehrerer Verbindungen speziell substituierter Pentaerythritoldiphosphite sowie ihre Verwendung.

Thermoplastische Polyurethane (TPU) finden eine breite Anwendung, weil sie gute Elastomereigenschaften aufweisen und leicht thermoplastisch weiterverarbeitet werden können. Durch geeignete Auswahl der Komponenten läßt sich eine große Variationsbreite mechanischer Eigenschaften erzielen. Eine Übersicht über TPU, ihre Eigenschaften und Anwendungen wird z.B. in Kunststoffe 68(1978)819, Kautschuk, Gummi, Kunststoffe 35(1982)569; G. Becker, D. Braun: Kunststoff-Handbuch, Bd. 7 "Polyurethane" München, Wien, Carl Hanser Verlag 1983 gegeben. Einen Überblick über die Herstellverfahren gibt Plastikverarbeiter 40 (1989).

TPU werden aus zumeist linearen Polyolen, wie Polyester- oder Polyetherpolyolen, organischen Diisocyanaten und kurzkettigen zumeist difunktionellen Alkoholen (Kettenverlängerern) aufgebaut. Sie können diskontinuierlich oder kontinuierlich hergestellt werden.

Thermoplastische Polyurethane sind aufgrund ihrer Rohstoffbasis und ihrer mindestens zweimaligen thermischen Belastung bei ihrer Herstellung und Verarbeitung besonders Verfärbungen ausgesetzt . Für viele Anwendungen von TPU ist aber die Farbe des Artikels eine wichtige Eigenschaft. Thermisch bedingte Verfärbungen während der TPU-Herstellung oder während der Spritzgieß- oder Extrusionsverarbeitung, insbesondere bei weißen oder hell eingefärbten Artikeln, sind unerwünscht.

In der US-A 4 169 196 beschreiben Ehrlich et al. ein Verfahren zur Herstellung von TPU auf Basis von 4,4'-Diphenylmethandiisocyanat unter Einsatz einer Phosphorkomponente PX3, wobei X Aryl-, Aryloxy- und niedrige Alkoxy-Gruppen sind, und unter Einsatz einer reduzierten Menge an Zinn-Katalysatoren. Bevorzugt wird ein Triphenylphosphit eingesetzt. Man erhält damit hitze- und farbstabile TPU.

Auch in der Monographie GE Specialty Chemicals (1997 by General Electrical Company) werden zur Verbesserung der Prozeß- und Farbstabilität von Thermoplasten aus Polyolefinen, Polyestern, Polyvinylchlorid, Polycarbonat, Polystyrol, ABS, Polyurethanen und anderen Elastomeren spezielle Phosphite beschrieben. Für Polyurethane werden Triphenylphosphit, eine Reihe von Tri(alkylphenyl)phosphiten, ein Hydroxyalkyltriphosphit, zwei substituierte Pentaerythritoldiphosphite

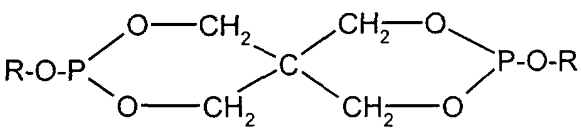

mit R=Stearyl und R=Di(tertbutyl)phenyl und ein substituiertes Pentaerythritolmonophosphit (R=Tri(tert.butyl)phenyl beschrieben.

Der Einsatz dieser Phosphite verringert die Verfärbung bei thermoplastischen Polyurethanen bei deren Herstellung und Verarbeitung.

Bei der TPU-Herstellung beeinflusst der Einsatz von Phosphiten allerdings auch die Reaktivität (Monomer-Reaktivität) der Ausgangskomponenten (EP-A 0 522 340). Deshalb ist der Einsatz von Phosphiten als Farbstabilisatoren bei der TPU-Herstellung problematisch.

Aufgabe war es, thermoplastisch verarbeitbare Polyurethanelastomere zur Verfügung zu stellen, die eine gute Eigenfarbe aufweisen und deren Eigenfarbe sich während der Herstellung bzw. Verarbeitung nicht bzw. kaum verändert.

Es wurde nun gefunden, dass TPU mit guter Farbe (geringer Gelbwert nach DIN 6167) bei unveränderter Monomer-Reaktivität zur Verfügung gestellt werden können, wenn speziell substituierte Pentaerythritoldiphosphite den Reaktionskomponenten vor oder während der TPU-Herstellung zugesetzt werden.

Gegenstand der Erfindung sind daher farbhelle thermoplastisch verarbeitbare Polyurethanelastomere (TPU) bestehend aus einem Reaktionsprodukt, welches erhältlich ist aus

A) wenigstens einem Polyol mit im Mittel mindestens 1,8 und höchstens 3,0 zerewitinoffaktiven Wasserstoffatomen und einem zahlenmittleren Molekulargewicht Mn von 450 bis 10000,
B) wenigstens einem organischen Diisocyanat und
C) wenigstens einem Polyol mit im Mittel mindestens 1,8 und höchstens 3,0 zerewitinoffaktiven Wasserstoffatomen und einem zahlenmittleren Molekulargewicht Mn von 60 bis 400,

wobei das NCO/OH-Verhältnis der verwendeten Reaktionskomponenten A), B) und C) zwischen 0,85 und 1,2 liegt,

und 0 bis 20 Gew.-%, bezogen auf TPU, weiterer Hilfs- und Zusatzstoffe (D), sowie 0,001 bis 1 Gew.-%, bezogen auf TPU, eines oder mehrerer Farbstabilisatoren aus der Gruppe der Pentaerythritoldiphosphite (E) der Formel (I)

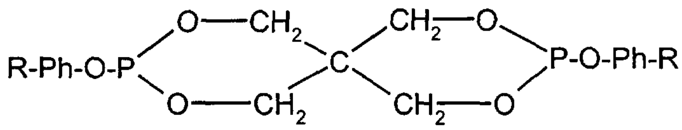

(I)

wobei
R = $C_6$- bis $C_{30}$-Alkyl, insbesondere $C_6$- bis $C_{20}$-Alkyl ist und Ph Phenyl bedeutet.

Die erfindungsgemäßen TPU weisen bevorzugt einen Gelbwert (gemessen nach DIN 6167) von kleiner 9 auf, besonders bevorzugt von kleiner 8.

Als organische Diisocyanate (B) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyant, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylenpolyisocyanate.

Zerewitinoff-aktive Polyole (A), die bei den erfindungsgemäßen Produkten eingesetzt werden, sind solche mit im Mittel mindestens 1,8 bis höchstens 3,0 zerewitinoff-aktiven Wasserstoffatomen und einem mittleren Molekulargewicht $\overline{M}_n$ von 450 bis 10000.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit mittleren Molekulargewichten $\overline{M}_n$ von 450 bis 6000, besonders bevorzugt solche mit einem mittleren Molekulargewicht $\overline{M}_n$ von 600 bis 4500; z.B. Hydroxylgruppen aufweisende Polyester, Polyether, Polycarbonate und Polyesteramide.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise mittlere Molekulargewichte $\overline{M}_n$ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen

beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen mittlere Molekulargewichte $\overline{M}_n$ von 450 bis 6000 und können einzeln oder in Form von Mischungen untereinander zur Anwendung kommen.

Zerewitinoff-aktive Polyole (C) sind sogenannte Kettenverlängerungsmittel und besitzen im Mittel 1,8 bis 3,0 zerewitinoff-aktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die relativen Mengen der Verbindungen (A) und (C) werden bevorzugt so gewählt, dass das Verhältnis der Summe der Isocyanatgruppen in (B) zu der Summe der zerewitinoffaktiven Wasserstoffatome in (A) und (C) 0,85:1 bis 1,2:1 beträgt, bevorzugt 0,95:1 bis 1,1:1.

Die erfindungsgemäßen, thermoplastischen Polyurethanelastomere können als Hilfs- und Zusatzstoffe (D) bis zu maximal 20 Gew.-%, bezogen auf TPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere

Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Die eingesetzten Farbstabilisatoren (E) sind substituierte Pentaerythritol-diphosphite

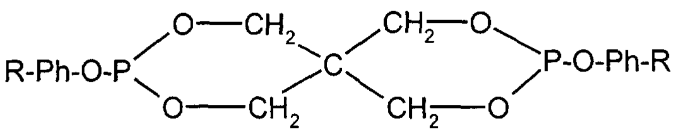

wobei R = $C_6$- bis $C_{30}$-Alkyl, bevorzugt $C_6$- bis $C_{20}$-Alkyl ist und Ph Phenyl bedeutet.

Beispielhaft sind Bis(hexylphenyl)Pentaerythritol-diphosphit, Bis(octylphenyl)Pentaerythritol-diphosphit, Bis (nonylphenyl)Pentaerythritol-diphosphit, Bis(decylphenyl)-Pentaerythritol-diphosphit, Bis(stearylphenyl)Pentaerythritol-diphosphit, Bis(2,4-hexylphenyl)Pentaerythritol-diphosphit und Bis(2,4-nonylphenyl)Pentaerythritol-diphosphit zu nennen.

Die genannten Verbindungen können einzeln, als Isomerengemische oder in Form von Mischungen untereinander zur Anwendung kommen.

Sie werden in Konzentrationen von 0,001 bis 1 Gew.-%, bezogen auf TPU, bevorzugt von 0,01 bis 0,5 Gew.-%, eingesetzt.

Die Farbstabilisatoren werden vorzugsweise den Reaktionskomponenten, bevorzugt dem Polyol, vor der Reaktion zugesetzt. Sie können aber auch, z.B. bei einer kontinuierlichen TPU-Herstellung in einem Extruder, direkt in den Extruder dosiert werden.

Ein weiterer Gegenstand der Erfindung ist ein Verfahren zur Herstellung der erfindungsgemäßen thermoplastisch verarbeitbaren Polyurethanelastomere, welches dadurch gekennzeichnet ist, dass die Komponenten A), B) und C) zur Reaktion gebracht werden, vor, während oder nach der Reaktion die Komponenten D) in einer Menge von 0 bis 20 Gew.-%, bezogen auf TPU, zugegeben werden und vor oder während der Reaktion die Komponenten E) in einer Menge von 0,001 bis 1 Gew.-%, bezogen auf TPU, zugegeben werden, wobei das NCO/OH-Verhältnis der eingesetzten Komponenten A), B) und C) zwischen 0,85 und 1,2 liegt, und dass das so erhaltene Produkt anschließend geformt wird.

Die Herstellung der TPU kann diskontinuierlich oder kontinuierlich durchgeführt werden . Kontinuierlich können die erfindungsgemäßen TPU beispielsweise mit dem Mischkopf/Bandverfahren oder dem sogenannten Extruderverfahren hergestellt werden. Im Extruderverfahren, z.B. in einem Mehrwellenextruder, kann die Dosierung der Komponenten A), B) und C) gleichzeitig, d.h. im one-shot-Verfahren, oder nacheinander, d.h. nach einem Prepolymer-Verfahren, erfolgen. Dabei kann das Prepolymer sowohl batchweise vorgelegt als auch kontinuierlich in einem Teil des Extruders oder in einem separaten, vorgeschalteten Prepolymeraggregat hergestellt werden.

Das erfindungsgemäße TPU kann gegebenenfalls weiter bearbeitet werden, z.B. durch Temperung des Polymers in Form von Platten oder Blöcken, Zerkleinerung oder Granulierung in Schreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine handeln, die möglichst mit keinen oder nur mit wenigen Knetelementen bestückt ist.

Die erfindungsgemäßen TPU werden zur Herstellung von Spritzgießartikeln und Extrusionsartikeln eingesetzt.

Die mit den Farbstabilisatoren versetzten TPU besitzen gute mechanische und elastische Eigenschaften. Zusätzlich haben sie im Vergleich zu bekannten, mit Phosphiten versetzten TPU überraschenderweise eine nur sehr geringe bis gar keine optisch sichtbare Färbung bei gleichzeitiger Beibehaltung der Monomerreaktivität. Der nach DIN 6167 gemessene Gelbwert liegt bei den erfindungsgemäßen TPU unter 9.

Auch nach den für ein TPU üblichen Weiterverarbeitungsschritten des Spritzgießen bzw. des Extrudierens bleibt der Gelbwert unter 9.

Die Erfindung soll anhand der nachfolgenden Beispiele näher erläutert werden.

**Beispiele 1 bis 11**

57,7 Gew.-Teile eines Polybutylenoxides (mittleres Molgewicht ca. 1000) wurden mit 0,30 Gew.-Teilen Pentaerithryltetrakis(3-(3,5-bis-1,1-dimethylethyl)-4-hydroxyphenyl)propionat, 0,18 Gew.-Teilen 2-(2'-Hydroxy-5'-methylphenyl)benzotriazol, der jeweiligen Menge an Farbstabilisator (siehe Tabelle) und 20 ppm (bezogen auf Polybutylenoxid) Zinndioctoat (Katalysator) in einem Topf auf 170°C erwärmt. Unter Rühren werden schnell 26,7 Gew.-Teile 4,4'-Diphenylmethandiisocyanat (60°C) zugegeben. Die Reaktionsmischung erreicht ein Temperaturmaximum (Prepolymerbildung).

Die Zeit bis zum Erreichen dieses Temperaturmaximums wird in der Tabelle als Maß für die Reaktivität angegeben. Das heißt, je kürzer die Zeit, desto reaktiver ist das System.

Nach ca. 90 sec. werden weitere 8,1 Gew.-Teile Diphenylmethandiisocyanat (60°C) zugegeben. 10 sec. später werden 7,0 Gew.-Teile Butandiol-1,4 zudosiert. Nach weiteren 10 bis 15 sec. wird die Reaktionsmischung auf ein beschichtetes Blech gegossen. Man tempert 30 Minuten bei 110°C nach und erhält beim Abkühlen eine TPU-Platte mit glatter Oberfläche.

**Beispiele 12 und 13**

24,8 Gew.-Teile eines Polybutylenoxides (mittleres Molgewicht ca. 1000) wurden mit 0,50 Gew.-Teilen Pentaerithryltetrakis(3-(3,5-bis-1,1-dimethylethyl)-4-hydroxyphenyl)propionat, 0,3 Gew.-Teilen 2-(2'-Hydroxy-5'-methylphenyl)benzotriazol, der jeweiligen Menge an Farbstabilisator (siehe Tabelle) und 29,0 Gew.-Teilen 1,6-Hexandiol in einem Topf durch Rühren homogen vermischt und auf 90°C erwärmt. Unter Rühren werden 45,4 Gew.-Teile 1,6-Hexamethylendiisocyanat (ebenfalls 90°C) zugegeben. Nach ca. 10 sec. Rühren werden 100 ppm (bezogen auf Polybutylenoxid) Dibutylzinndilaurat (Katalysator) zugegeben und weiter gerührt. Nach Erreichen des Temperatur- bzw. Drehmomentmaximums (hochviskos, aber noch gießbar) wird die Reaktionsmischung auf ein beschichtetes Blech gegossen. Man tempert 30 Minuten bei 110°C nach und erhält beim Abkühlen eine TPU-Platte mit glatter Oberfläche.

Die Zeit bis zum Erreichen des Temperaturmaximums wird in der Tabelle als Maß für die Reaktivität angegeben.

Bestimmung des Gelbwertes

Der Gelbwert (als Maß für die Färbung) wurde an der glatten Oberfläche der auf das Blech ausgegossenen und gehärteten TPU-Platte gemessen.

Die Bestimmung des Gelbwertes wurde mit der Minolta Chroma Meter CR-100 an den Prüfkörpern durchgeführt.

Die Bestimmung des Gelbwertes erfolgt gemäß der DIN 6167.

Das Gerät wird grundsätzlich vor jeder Meßreihe kalibriert. Nach Auslösen des Meßblitzes muß das Display die rückseitig auf der weißen Eichplatte notierten Werte anzeigen:

| | | |
|---|---|---|
| 91,1<br>Y | 0,317<br>x | 0,335<br>y |

Bei anderen Wertepaaren muss das Gerät nach Herstellerangabe kalibriert werden. Der Referenzgelbwert der Eichplatte beträgt 3,75.

Der Gelbwert G errechnet sich folgendermaßen:

$$G = (((2,45*x-1,149)/y)+1,149)*100$$

Zur Bestimmung des Gelbwerts wird der Prüfkörper so auf die weiße Keramikreferenzplatte gelegt, dass die mittleren Bereiche übereinanderliegen. Anschließend wird der Meßblitz ausgelöst.

Die x- und y-Werte werden abgelesen und nach obiger Formel der Gelbwert (G) ausgerechnet.

Folgende Farbstabilisatoren wurden verwendet:

| Farbstabilisator | Name | Hersteller | Struktur |
|---|---|---|---|
| 1 | | | Formel 1 |
| 2 | Irgafos® P-EPQ | Ciba Specialty Chemicals Inc. | $-(Ph-P-(OPh-R_2)_2)_2$ R=tert-Butyl |

(fortgesetzt)

| Farbstabilisator | Name | Hersteller | Struktur |
|---|---|---|---|
| 3 | Weston® TPP | General Electric Company (GE) | Triphenylphosphit |
| 4 | Weston® 399 | GE | Tris(nonylphenyl)phosphit |
| 5 | Ultranox® 641 | GE | Formel 2 |
| 6 | Ultranox® 626 | GE | Formel 3 |
| 7 | Weston® 619 | GE | Formel 4 |
| 8 | ADK-Stab.PEP-4C | Asahi Denka Kogyo K.K. | Formel 5 |

Formel 1:

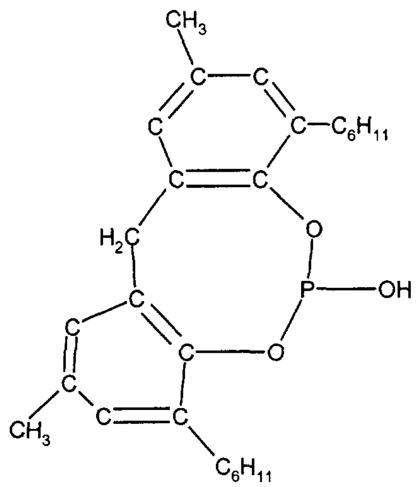

Formel 2:

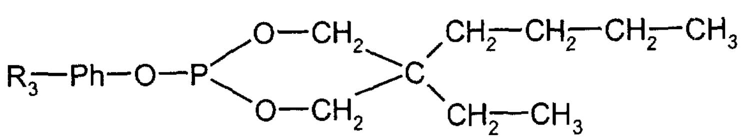

R = tert.-Butyl, Ph = Phenyl

Formel 3:

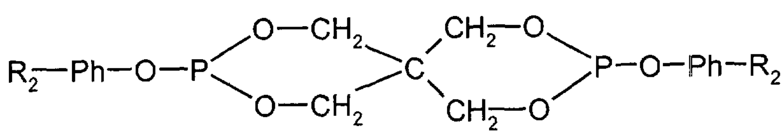

R = tert.-Butyl, Ph = Phenyl

Formel 4:

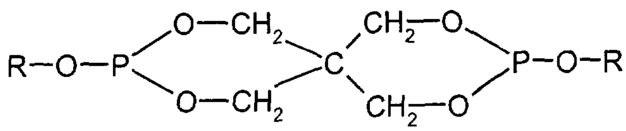

R = Stearyl

Formel 5:

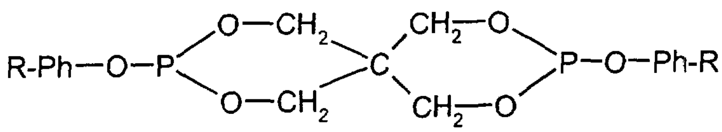

R = Nonyl, Ph = Phenyl

Tabelle:

| Ergebnisse | | | | |
|---|---|---|---|---|
| Beispiel | Farbstabilisator | Menge Gew.-% bez.auf TPU | Zeit $t_{max}$ Prepolymerreaktion | Gelbwert |
| 1* | keiner | 0 | 50 | 23 |
| 2* | 1 | 0,06 | 100 | 13 |
| 3* | 2 | 0,06 | 50 | 12 |
| 4* | 3 | 0,06 | 42 | 11 |
| 5* | 4 | 0,06 | 48 | 17 |
| 6* | 5 | 0,06 | 43 | 10 |
| 7* | 6 | 0,06 | 40 | 11 |
| 8* | 7 | 0,06 | 50 | 9 |
| 9 | 8 | 0,06 | 52 | 6 |
| 10 | 8 | 0,15 | 50 | 5 |
| 11 | 8 | 0,30 | 60 | 3 |
| 12* | keiner | 0 | 110 | 18 |
| 13 | 8 | 0,21 | 115 | 8 |

Die mit * gekennzeichneten Beispiele bezeichnen Vergleichsbeispiele.

**Patentansprüche**

**1.** Farbhelle thermoplastisch verarbeitbare Polyurethanelastomere (TPU) bestehend aus einem Reaktionsprodukt, welches erhältlich ist aus

A) wenigstens einem Polyol mit im Mittel mindestens 1,8 und höchstens 3,0 zerewitinoffaktiven Wasserstoffatomen und einem zahlenmittleren Molekulargewicht Mn von 450 bis 10000,

B) wenigstens einem organischen Diisocyanat und

C) wenigstens einem Polyol mit im Mittel mindestens 1,8 und höchstens 3,0 zerewitinoffaktiven Wasserstoffatomen und einem zahlenmittleren Molekulargewicht Mn von 60 bis 400,

wobei das NCO/OH-Verhältnis der verwendeten Reaktionskomponenten A), B) und C) zwischen 0,85 und 1,2 liegt, und 0 bis 20 Gew.-%, bezogen auf TPU, weiterer Hilfs- und Zusatzstoffe (D),
sowie 0,001 bis 1 Gew.-%, bezogen auf TPU, eines oder mehrerer Farbstabilisatoren aus der Gruppe der Pentaerythritoldiphosphite (E) der Formel (I)

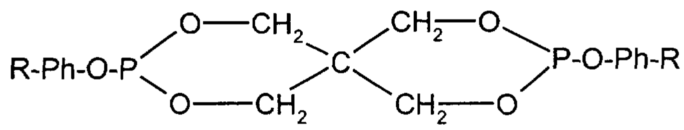

(I)

wobei
R = $C_6$- bis $C_{30}$-Alkyl, insbesondere $C_6$- bis $C_{20}$-Alkyl ist und Ph Phenyl bedeutet.

**2.** Thermoplastisch verarbeitbare Polyurethanelastomere (TPU) gemäß Anspruch 1, **dadurch gekennzeichnet, dass** das Diisocyanat B) ein aromatisches oder ein aliphatische Diisocyanat ist.

**3.** Thermoplastisch verarbeitbare Polyurethanelastomere (TPU) gemäß Anspruch 1 oder 2, **dadurch gekennzeichnet, dass** das Polyol C) Ethylenglykol, Butandiol, Hexandiol, 1,4-Di-(betahydroxyethyl)-hydrochinon und/oder 1,4-di-(betahydroxyethyl)-bisphenol A ist.

**4.** Thermoplastisch verarbeitbare Polyurethanelastomere (TPU) gemäß einem oder mehreren der Ansprüche 1 bis 3, **dadurch gekennzeichnet , dass** man den Rohstoffen vor oder während der TPU-Herstellung 0,01 bis 0,5 Gew.-%, bezogen auf TPU, ein oder mehrere Verbindungen des Pentaerythritoldisphophits (E) zusetzt.

**5.** Thermoplastisch verarbeitbare Polyurethanelastomere (TPU) gemäß einem oder mehreren der Ansprüche 1 bis 4, **dadurch gekennzeichnet, dass** das Polyol A) ein Polyether ist.

**6.** Verwendung der thermoplastisch verarbeitbaren Polyurethane gemäß den Ansprüchen 1 bis 5 zur Herstellung von Spritzgießartikeln und Extrusionsartikeln.

**7.** Verfahren zur Herstellung der thermoplastisch verarbeitbaren Polyurethane gemäß den Ansprüchen 1 bis 5, **dadurch gekennzeichnet, dass** die Komponenten A), B) und C) zur Reaktion gebracht werden, vor, während oder nach der Reaktion die Komponenten D) in einer Menge von 0 bis 20 Gew.-%, bezogen auf TPU, zugegeben werden und vor oder während der Reaktion die Komponenten E) in einer Menge von 0,001 bis 1 Gew.-%, bezogen auf TPU, zugegeben werden, wobei das NCO/OH-Verhältnis der eingesetzten Komponenten A), B) und C) zwischen 0,85 und 1,2 liegt.

Europäisches Patentamt

# EUROPÄISCHER RECHERCHENBERICHT

Nummer der Anmeldung
EP 01 12 2526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 4 677 154 A (NARAYAN THIRUMURTI ET AL) 30. Juni 1987 (1987-06-30) * Spalte 1, Zeile 46 - Spalte 2, Zeile 40 * * Beispiel 11; Tabelle I * | 1,2 | C08G18/08 C08G18/10 C08G18/48 C08G18/66 C08K5/527 |
| A | * Ansprüche 1,5,9 * | 3,4,7 | |
| Y | DE 196 30 903 A (BAYER AG) 5. Februar 1998 (1998-02-05) * Seite 2, Zeile 3 - Seite 3, Zeile 21 * * Seite 6 * | 1,2 | |
| A | US 4 654 105 A (FESMAN GERALD) 31. März 1987 (1987-03-31) * Spalte 4, Zeile 5 - Zeile 50 * * Beispiel 3; Tabelle I * | 1,7 | |

RECHERCHIERTE SACHGEBIETE (Int.Cl.7)
C08G
C08K

Der vorliegende Recherchenbericht wurde für alle Patentansprüche erstellt

| Recherchenort | Abschlußdatum der Recherche | Prüfer |
|---|---|---|
| DEN HAAG | 10. Januar 2002 | Neugebauer, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.** EP 01 12 2526

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2002

| Im Recherchenbericht angeführtes Patentdokument | Datum der Veröffentlichung | Mitglied(er) der Patentfamilie | Datum der Veröffentlichung |
|---|---|---|---|
| US 4677154 A | 30-06-1987 | CA 1308826 A1 | 13-10-1992 |
| | | GB 2184733 A | 01-07-1987 |
| DE 19630903 A | 05-02-1998 | DE 19630903 A1 | 05-02-1998 |
| US 4654105 A | 31-03-1987 | US 4616044 A | 07-10-1986 |
| | | EP 0189644 A2 | 06-08-1986 |
| | | JP 61174217 A | 05-08-1986 |
| | | US 4652485 A | 24-03-1987 |

EPO FORM P0461

Für nähere Einzelheiten zu diesem Anhang : siehe Amtsblatt des Europäischen Patentamts, Nr.12/82